# EUROPEAN PATENT SPECIFICATION

(11) **EP 4 468 446 B1**
(45) Date of publication and mention of the grant of the patent: **27.05.2026**
(21) Application number: 23760330.3
(22) Date of filing: 16.02.2023
(51) Int. Cl.: H01M 10/42, H01M 50/284, H01M 50/211, H01M 10/48

(54) **BATTERY PACK**
BATTERIEPACK
BLOC-BATTERIE

(30) Priority: 23.02.2022 KR 20220023960
(43) Date of publication of application: 27.11.2024
(73) Proprietor: LG Energy Solution, Ltd., Seoul 07335 (KR)
(72) Inventor: LEE, Min Bok, Daejeon 34122 (KR); YI, Ju Sung, Daejeon 34122 (KR); YANG, Chang Hyeon, Daejeon 34122 (KR)
(74) Representative: Plasseraud IP
(86) International application number: PCT/KR2023/002287
(87) International publication number: WO 2023/163456

(56) References cited:
- EP-A1- 3 579 326
- EP-B1- 3 446 356
- EP-B1- 3 446 356
- WO-A1-2022/035055
- AU-A1- 2021 231 261
- DE-B3- 102019 209 585
- JP-A- 2022 512 119
- KR-A- 20200 095 877
- KR-A- 20210 026 589
- KR-A- 20210 037 459
- KR-A- 20210 131 607
- US-A1- 2019 187 004

## Description

### TECHNICAL FIELD

### CROSS-REFERENCE TO RELATED APPLICATION

The present application claims the benefit of the priority of Korean Patent Application No. 10-2022-0023960, filed on February 23, 2022.

### TECHNICAL FIELD

The present invention relates to a battery pack.

### BACKGROUND ART

Secondary batteries are rechargeable unlike primarily batteries, and also, the possibility of compact size and high capacity is high. Thus, recently, many studies on secondary batteries are being carried out. As technology development and demands for mobile devices increase, the demands for secondary batteries as energy sources are rapidly increasing.

Rechargeable batteries are classified into coin type batteries, cylindrical type batteries, prismatic type batteries, and pouch type batteries according to a shape of a battery case. In such a secondary battery, an electrode assembly mounted in a battery case is a chargeable and dischargeable power generating device having a structure in which an electrode and a separator are stacked.

Secondary batteries are attracting much attention as energy sources for power devices such as electric bicycle, electric vehicles, and hybrid electric vehicles as well as mobile devices such as mobile phones, digital cameras, and laptops.

A small-sized battery pack in which one battery cell is packed is used for small devices such as mobile phones and cameras, but a battery pack in which two or more battery cells are connected in parallel and/or series is used for medium and large-sized devices such as laptop computers and electric vehicles. Thus, the number of battery cells provided in the battery pack may be variously set according to a required output voltage or charge/discharge capacity.

When the battery pack is configured by connecting a plurality of battery cells in series/parallel, a method in which a battery module constituted by at least one battery cell is configured first, and other components are added using the at least one battery module to constitute the battery pack is common.

That is, a battery is constituted by cells, which are the smallest units, and since a pouch-type cell requires structural rigidity, a module including a plurality of cells is provided as an intermediate unit, and then, a plurality of modules are provided to constitute a pack.

Since each of the modules in the pack has to perform various signal sensing (voltage/temperature) through a battery management system (BMS), the modules are electrically connected to the BMS. In addition, the corresponding component is connected through a long wire called a low voltage (LV) line.

Recently, as the high voltage and high capacity of the pack progresses, the importance of stability within the pack is emerging, but when such an LV wire is provided in the pack, there is a problem of having a safety risk such as electrical short-circuit. Examples of background art can be found in EP 3 446 356 B1.

### DISCLOSURE OF THE INVENTION

### TECHNICAL PROBLEM

One aspect of the present invention is to provide a battery pack capable of reducing an occurrence of a safety risk.

### TECHNICAL SOLUTION

A battery pack according to the claimed invention is a battery pack including a battery module, wherein the battery module includes: a cell stack in which a plurality of battery cells are stacked; a flexible circuit board configured to transmit information of the battery cell; a module housing configured to accommodate the cell stack and the flexible circuit board; a wireless transmission battery management system (BMS) configured to receive the information of the battery cell from the flexible circuit board; and a BMS accommodation part provided at the outer side of the module housing to accommodate the wireless transmission BMS.

### ADVANTAGEOUS EFFECTS

According to the present invention, in the battery pack, the battery module includes the wireless transmission BMS that receives the information of the battery cell disposed therein and the BMS accommodation part in which the wireless transmission BMS is accommodated so that the information of the battery cell is wirelessly transmitted. As a result, the wire such as the low voltage (LV) that connects the BMS inside the battery pack may not be used to reduce the occurrence of the safety risk. That is, the bundle of the wires such as the LV connecting the BMS may be removed to prevent the risk of the short circuit caused by applying the current and voltage to the bundle of the wires such as the LV.

In addition, since the BMS accommodation part is coupled to the outer side of the module housing by the coupling means, the modularization may be easy, and the accessibility and repair in the event of the breakdown of the wireless transmission BMS accommodated in the BMS accommodation part may be facilitated.

The BMS accommodation part may be mounted on the endplate of the module housing and be mounted in the mounting groove recessed from the endplate toward the surplus internal space of the module housing to minimize the wasted space inside the battery module.

### BRIEF DESCRIPTION OF THE DRAWINGS

FIG. 1 is a projected plan view illustrating an example of a battery pack according to an embodiment of the present invention.
FIG. 2 is a perspective view illustrating a battery module in the battery pack according to an embodiment of the present invention.
FIG. 3 is an exploded perspective view illustrating the battery module in the battery pack according to an embodiment of the present invention.
FIG. 4 is a perspective view illustrating a cell stack in the battery module of the battery pack according to an embodiment of the present invention.
FIG. 5 is a side view illustrating a battery cell in the battery module of the battery pack according to an embodiment of the present invention.
FIG. 6 is a side view illustrating a main part of the battery cell in the battery module of the battery pack according to an embodiment of the present invention.
FIG. 7 is a perspective view illustrating a main part of the battery module in the battery pack according to an embodiment of the present invention.
FIG. 8 is an exploded perspective view illustrating the main part of the battery module in the battery pack according to an embodiment of the present invention.
FIG. 9 is a perspective view illustrating a concept in which an endplate is removed from the battery module of the battery pack according to an embodiment of the present invention.
FIG. 10 is a side view illustrating the main part of the battery module in the battery pack according to an embodiment of the present invention.
FIG. 11 is a side view illustrating the main part of the battery module in the battery pack according to an embodiment of the present invention.

### MODE FOR CARRYING OUT THE INVENTION

The objectives, specific advantages, and novel features of the present invention will become more apparent from the following detailed description taken in conjunction with the accompanying drawings. It should be noted that the reference numerals are added to the components of the drawings in the present specification with the same numerals as possible, even if they are illustrated in other drawings. Also, the present invention may be embodied in different forms and should not be construed as limited to the embodiments set forth herein.

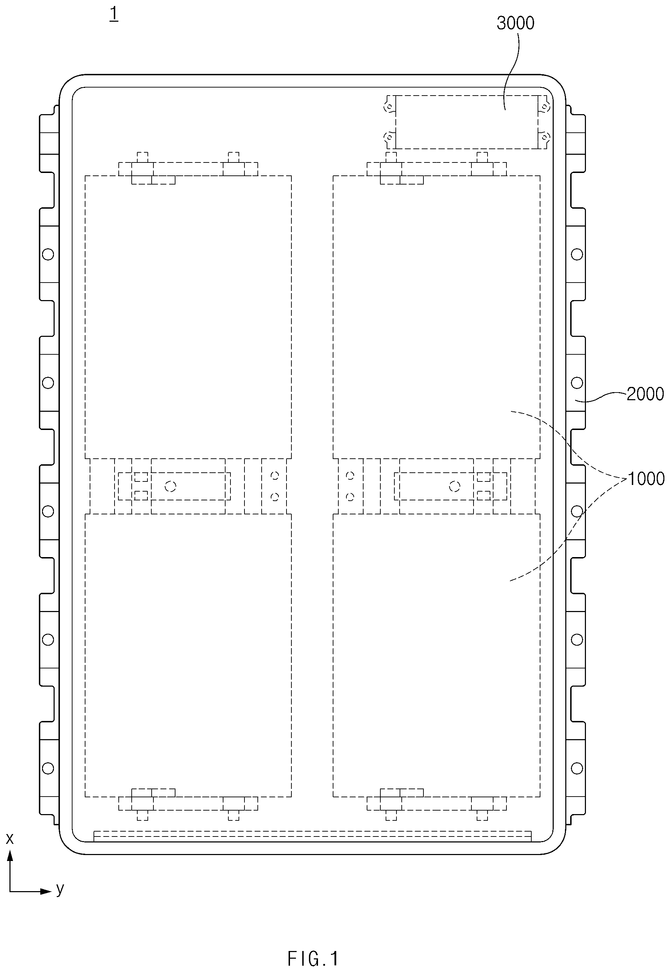

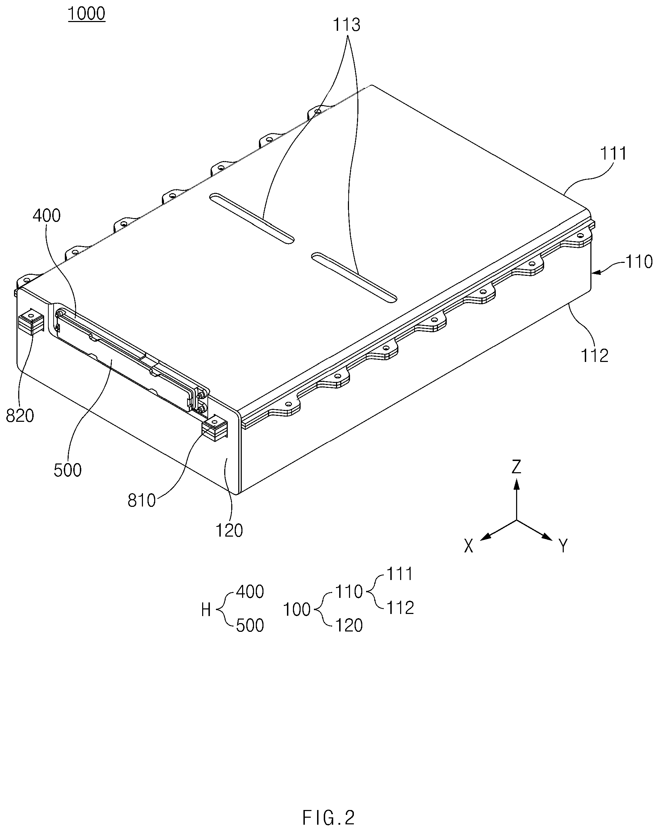

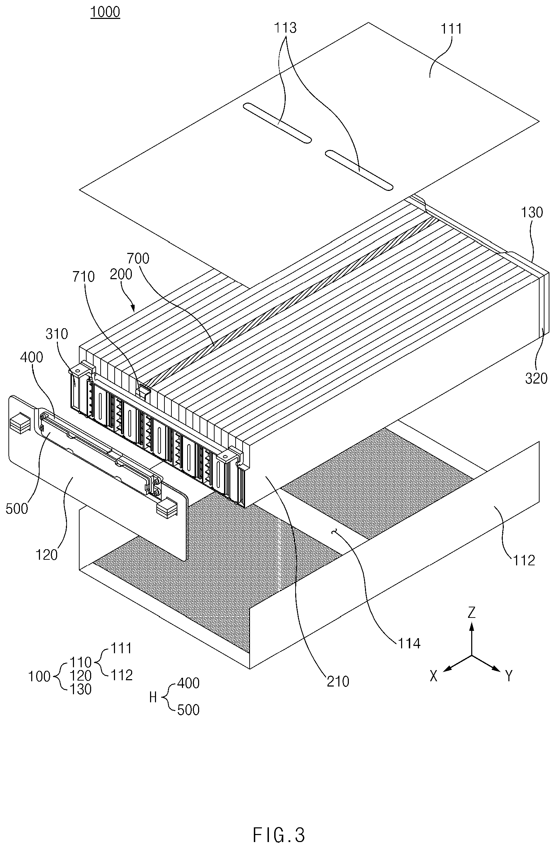

FIG. 1 is a projected plan view illustrating an example of a battery pack according to an embodiment of the present invention, FIG. 2 is a perspective view illustrating a battery module in the battery pack according to an embodiment of the present invention, and FIG. 3 is an exploded perspective view illustrating the battery module in the battery pack according to an embodiment of the present invention.

Referring to FIGS. 1 to 3, a battery pack 1 according to the claimed invention is a battery pack 1 including a battery module 1000, and the battery module 1000 includes a cell stack 200 in which a plurality of battery cells 210 are stacked, a flexible circuit board 700 that transmits information of the plurality of battery cells 210, a module housing 100 accommodating the cell stack 200 and the flexible circuit board 700, a wireless transmission BMS 600 receiving the information of the battery cell 210 from the flexible circuit board 700, and a BMS accommodation part H in which the wireless transmission BMS 600 is accommodated. In addition, the battery pack 1 according to an embodiment of the present invention may further include a wireless receiving BMS 3000 and a pack case 2000.

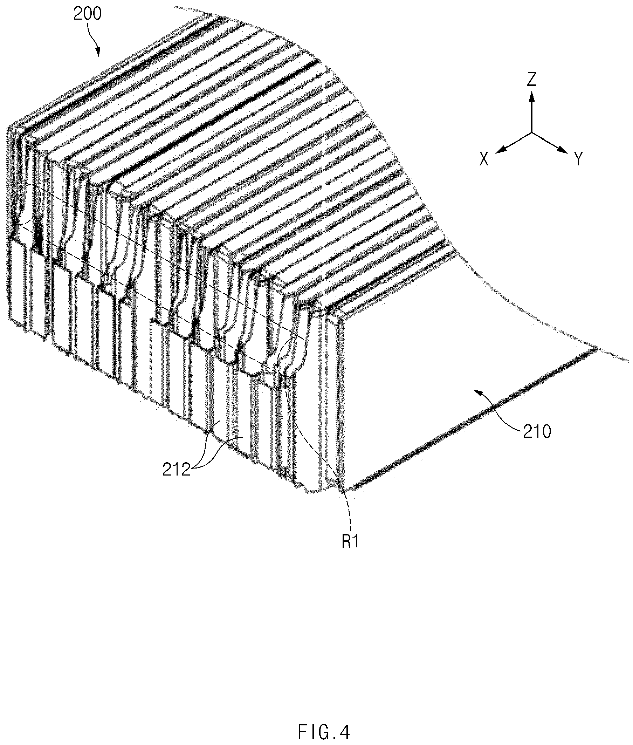

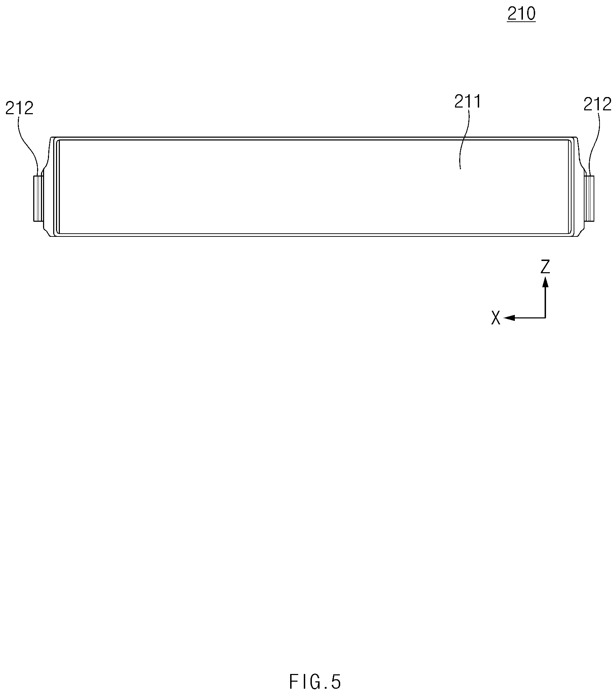

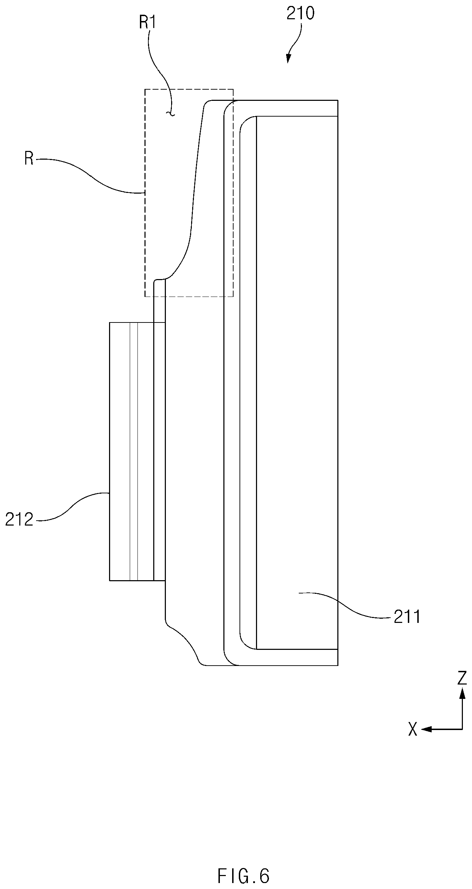

FIG. 4 is a perspective view illustrating the cell stack in the battery module of the battery pack according to an embodiment of the present invention, FIG. 5 is a side view illustrating the battery cell 210 in the battery module of the battery pack according to an embodiment of the present invention, and FIG. 6 is a side view illustrating a main part of the battery cell in the battery module of the battery pack according to an embodiment of the present invention.

In more detail, referring to FIGS. 4 to 6, the cell stack 200 has a shape in which the plurality of battery cells 210 are stacked.

The battery cell 210 may include an electrode assembly and a pouch 211 accommodating the electrode assembly therein.

The electrode assembly may be a chargeable and dischargeable power generating element, and electrodes and separators may be alternately stacked in the electrode assembly. Here, the electrodes may include a positive electrode and a negative electrode, and the positive electrode, the separators, and the negative electrode may be alternately stacked. here, each of the separators separates the positive electrode from the negative electrode to electrically insulate the positive electrode from the negative electrode.

The battery cell 210 may further include an electrode lead 212 having one side connected to the electrode of the electrode assembly and the other side extending to the outside of the pouch 211.

In the battery cell 210, for example, the electrode lead 212 may extend to both sides. In addition, referring to FIGS. 5 and 6, as the electrode lead 212 is disposed to extend downward, a surplus space R1 that is an empty space may be defined in an upper edge portion R of the battery cell 210. Thus, referring to FIG. 4, when the plurality of battery cells 210 are stacked in a Y-axis direction that is a traverse direction to form the cell stack 200, a surplus space R1 that is an empty space may be defined in an upper edge portion R of the cell stack 200.

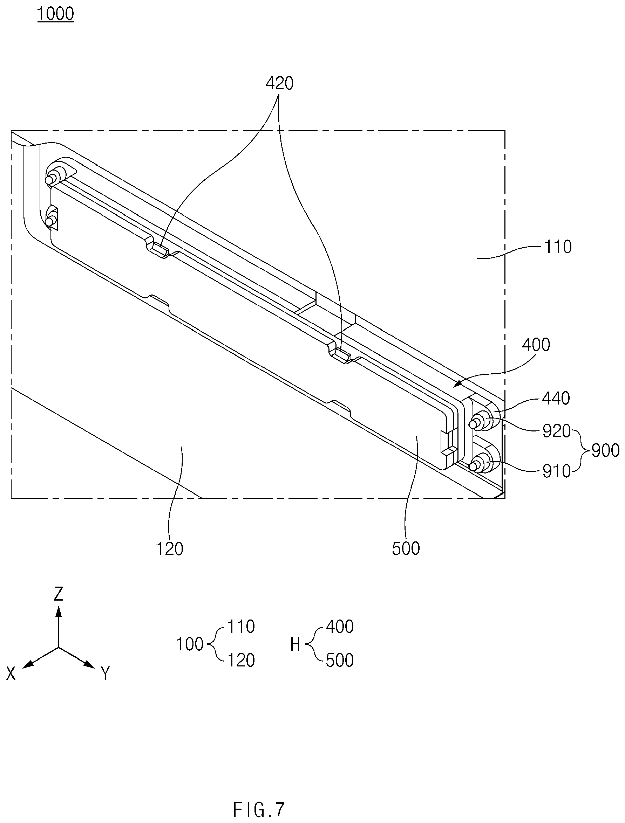

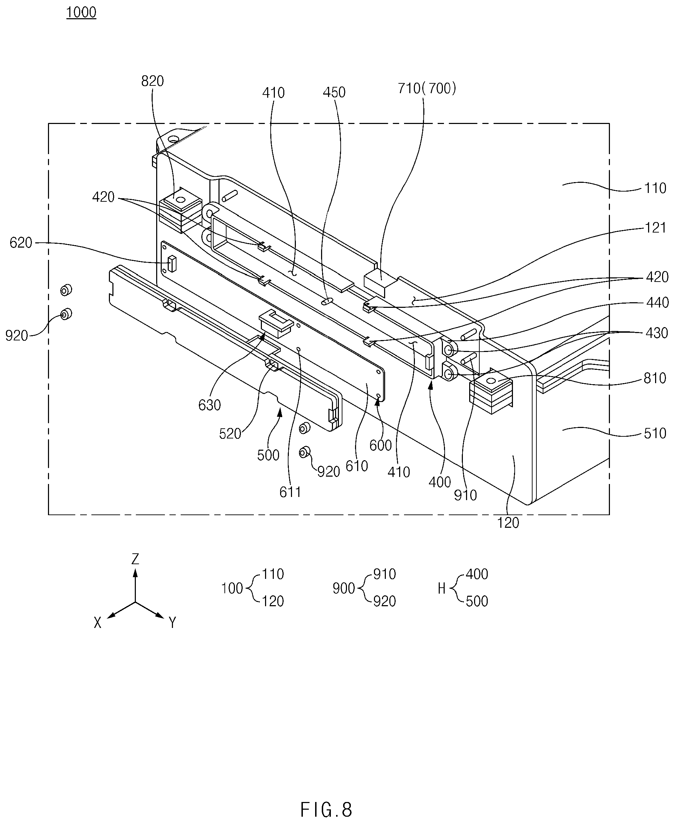

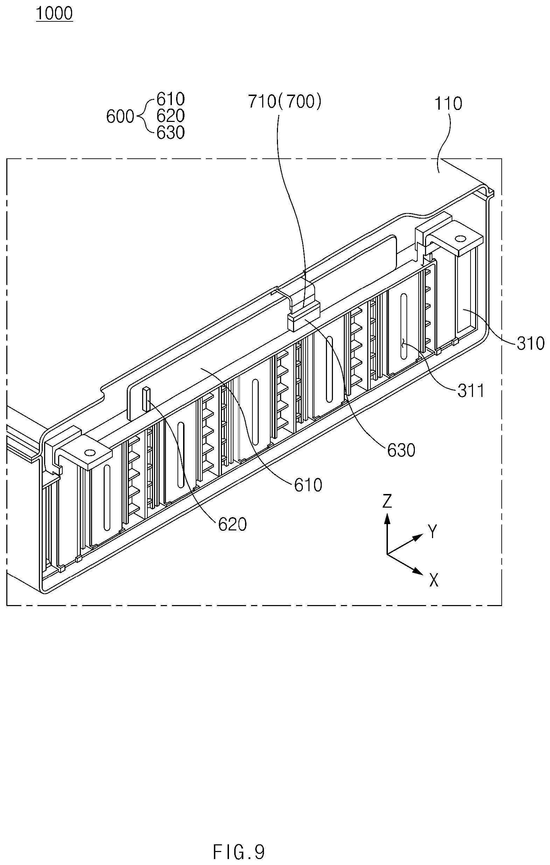

FIG. 7 is a perspective view illustrating a main part of the battery module in the battery pack according to an embodiment of the present invention, FIG. 8 is an exploded perspective view illustrating the main part of the battery module in the battery pack according to an embodiment of the present invention, and FIG. 9 is a perspective view illustrating a concept in which an endplate is removed from the battery module of the battery pack according to an embodiment of the present invention. Here, FIG. 9 illustrates a state in which the BMS accommodation part is removed from convenience so as to clearly show a state in which the flexible circuit board is connected to the wireless transmission BMS 600.

Referring to FIGS. 3 and 7 to 9, the wireless transmission battery management system (BMS) 600 receives information of the battery cell 210 from the flexible circuit board 700.

The wireless transmission BMS 600 may include a connection part 630 to which an end 710 of the flexible circuit board 700 is connected.

The wireless transmission BMS 600 may include a wireless transmission part 620 that wirelessly transmits an information signal of the battery cells 210 received from the flexible circuit board 700.

The wireless transmission BMS 600 may include a substrate 610 on which the connection part 630 and the wireless transmission part 620 are mounted. A fitting hole 611 may be defined in the substrate 610.

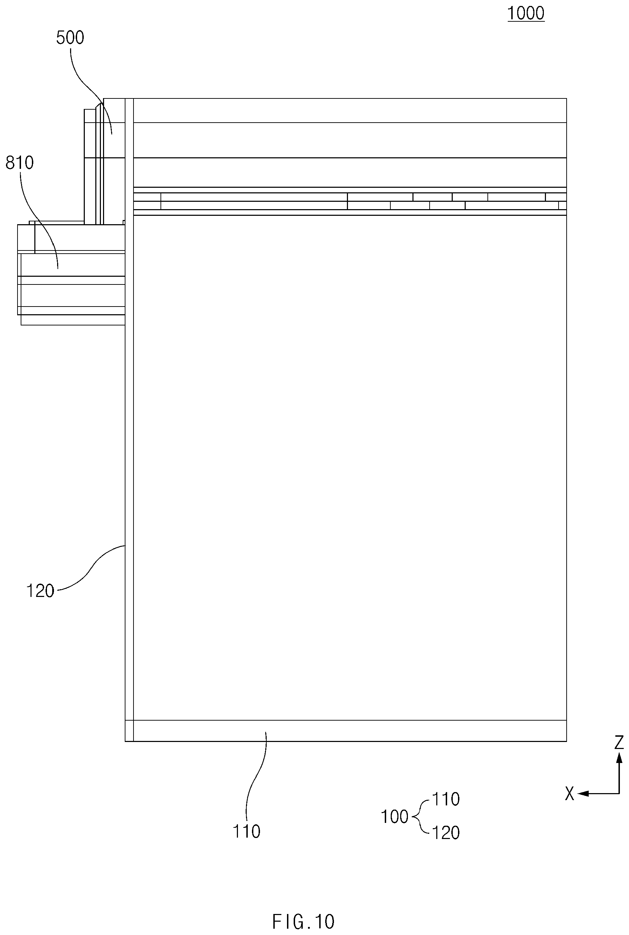

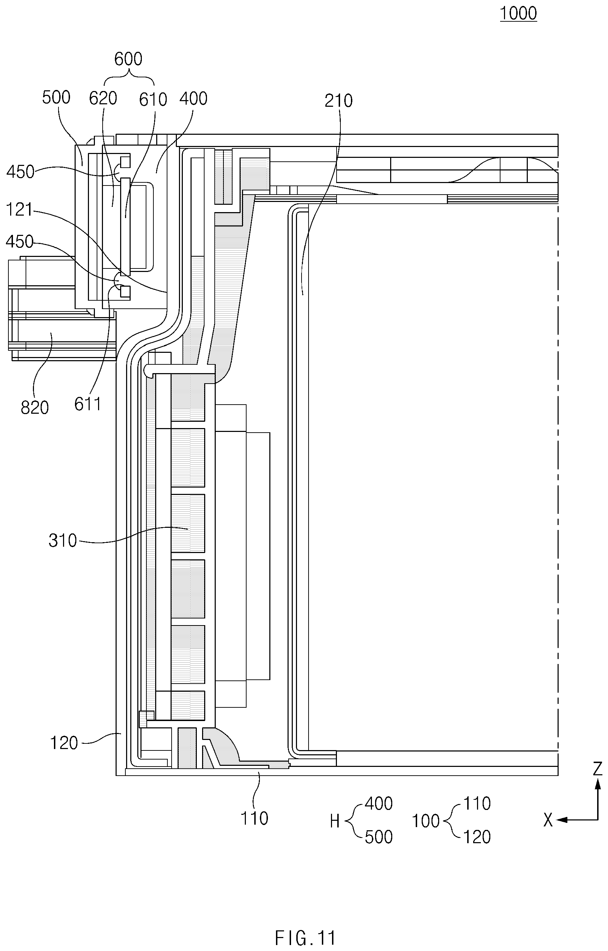

FIG. 10 is a side view illustrating the main part of the battery module in the battery pack according to an embodiment of the present invention, and FIG. 11 is a side view illustrating the main part of the battery module in the battery pack according to an embodiment of the present invention.

Referring to FIGS. 7 to 11, the BMS accommodation part H is provided at an outer side of the module housing 100 so that the wireless transmission BMS 600 is accommodated therein.

Referring to FIGS. 7 and 8, the BMS accommodation part H includes an accommodation case 400 having an accommodation groove 410 that is opened to the outer side of the module housing 100 to accommodate the wireless transmission BMS 600. The BMS accommodation part H may further include a cover 500 covering an opening of the accommodation groove 410.

A coupling protrusion 420 may be disposed on the accommodation case 400, and a coupling hole 520 to which the coupling protrusion 420 is coupled may be defined in the cover 500. Thus, as the coupling hole 520 of the cover 500 is coupled to the coupling protrusion 420 of the accommodation case 400, the cover 500 may be detachably coupled to the accommodation case 400. Thus, the wireless transmission BMS 600 accommodated in the accommodation case 400 may be easily replaced.

The accommodation case 400 may be coupled at an outer side portion of the module housing 100 through a coupling means 900.

In addition, the accommodation case 400 may have a coupling hole 430 through which the coupling means 900 passes to be coupled. The coupling hole 430 may be defined in the coupling part 440 extending in the Y-axis direction, which is a width direction of the battery module 1000, in the accommodation case 400.

The coupling means 900 may include, for example, a bolt 910 and a nut 920. The bolt 910 may have one side fixed to the module housing 100 and the other side extending to the outer side direction of the module housing 100, and the nut 920 may be coupled to the other side of the bolt 910 after the bolt 910 is coupled to the coupling hole 430 of the accommodation case 400. Here, as the bolt 910 is inserted into the coupling hole 430 of the accommodation case 400, and the nut 920 is coupled to the other side of the bolt 910, the accommodation case 400 may be fixed at an outer side portion of the module housing 100. However, in the battery module 1000 of the battery pack according to an embodiment of the present invention, the coupling means 900 may not be necessarily limited to the bolt 910 and the nut 920. For another example, the coupling means 900 may be a rivet or the like.

Referring to FIGS. 8 and 11, the accommodation case 400 may further include a fitting protrusion 450 fitted into the fitting hole 611 of the substrate 610 in the wireless transmission BMS 600. Thus, the wireless transmission BMS 600 may be accommodated in the accommodation case 400 so as not to move.

Referring to FIGS. 2 and 3, the module housing 100 may accommodate the cell stack 200 and the flexible circuit board 700.

The module housing 100 may include a body 110 provided with a stack accommodation part 114, in which the cell stack 200 is accommodated, and having a tubular shape that is opened to both sides, and endplates 120 and 130 covering openings of the body 110. Here, the BMS accommodation part H may be mounted on the endplate 120.

Referring to FIGS. 3, 4 and 8, after the cell stack 200 is accommodated in the stack accommodation part 114 inside the body 110, the surplus space R1 that is an empty space may be defined. Here, the endplate 120 may have a mounting groove 121 that is recessed into the module housing 100 to occupy the surplus space R1. In addition, the BMS accommodation part H may be accommodated in the mounting groove 121 and be mounted on the endplate 120.

The endplates 120 and 130 may be provided in plurality to cover the openings defined at both sides of the body 110, respectively. Here, the BMS accommodation part H may be mounted on one endplate 120 of the plurality of endplates 120 and 130. Here, the plurality of endplates 120 and 130 may be disposed on front and rear surfaces of the body 110, and the BMS accommodation part H may be mounted on the endplate 120 disposed on the front surface of the body 110. In addition, the recessed mounting groove 121 may be defined by pressing the endplate 120 disposed on the front surface of the body 110. In addition, since the endplate 120 disposed on the front surface of the body 110 may be sealed and welded to the body 110, the endplate 120 may have an advantage in terms of sealing and thermal propagation of the module.

The body 110 may include a body 112, which is provided in a " 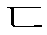 " shape and opened to an upper side, and a top plate covering an upper portion 111 of the body 112. In addition, a gas discharge hole 113 may be defined in the body 110 so that an internal gas is discharged to the outside.

Referring to FIGS. 3, 4, and 9, in the battery pack 1 according to an embodiment of the present invention, the battery module 1000 may further include busbars 310 and 320.

The electrode lead 212 of the battery cell 210 may be electrically connected to the busbars 310 and 320. Here, the electrode lead 212 of the battery cell 210 may pass through the connection hole 311 of the busbars 310 and 320 and be connected to the busbars 310 and 320. The electrode lead 212 may be connected to the busbars 310 and 320 and be electrically connected to terminals 810 and 820.

The busbars 310 and 320 may include an insulating part made of an insulating material and a conductive part made of a material through which electricity is conducted. The conductive part may be a portion connecting a peripheral portion of the connection hole and each of the terminals 810 and 820.

Referring to FIGS. 3, 8 and 9, the flexible circuit board 700 may transfer information of the battery cell 210 to the wireless transmission BMS 600. Here, the flexible circuit board 700 may transfer an information signal of the battery cell 210 to the wireless transmission BMS 600. Here, the information signal of the battery cell 210 may be at least one or more of a remaining capacity, a voltage, and a temperature signal of the battery cell 210.

The flexible circuit board 700 may be, for example, a flexible printed circuit board (FPCB).

In addition, the flexible circuit board 700 may include a measurement sensor, which measures a voltage and current, and be connected to the busbars 310 and 320 to measure the voltage and current flowing inside the busbars 310 and 320. Thus, the electrode lead 212 of the battery cell 210 may be connected to the busbars 310 and 320 to measure the voltage and current flowing inside the busbars 310 and 320, thereby measuring amounts of voltage and current flowing into the battery cell 210.

In addition, the flexible circuit board 700 may include a temperature sensor, and a portion at which the temperature sensor is disposed may be in contact with the cell stack 200 to measure the temperature of the battery cell 210.

In addition, an end 710 of the flexible circuit board 700 may further extend to be connected to the wireless transmission BMS 600.

Referring to FIGS. 1, 3, and 8, a wireless receiving BMS 3000 may wirelessly receive the information signal of the battery cell 210 from the wireless transmitting BMS 600.

The wireless receiving BMS 3000 may determine a state of the battery cell 210 through the received information signal of the battery cell 210 and control charging and discharging of the battery cell 210 so that the battery is maintained in an appropriate state.

The information signal of the battery cell 210 may be at least one of the remaining capacity, the voltage, or the temperature signals of the battery cell 210.

Referring to FIG. 1, the pack case 2000 may accommodate the battery module 1000 therein. Here, the battery module 1000 may be provided in plurality and accommodated inside the pack case 2000.

In addition, the wireless receiving BMS 3000 may be installed inside the pack case 2000 to receive the information signals of the battery cells 210 disposed in each battery module 1000 from the wireless transmission BMS 600 provided in each of the plurality of battery modules 1000.

Referring FIGS. 1 and 8, in the battery pack 1 having the above configuration according to an embodiment of the present invention, the battery module 1000 in the battery pack 1 may include the wireless transmission BMS 600 receiving the information of the battery cell 210 disposed inside the battery module 1000 and the BMS accommodation part, in which the wireless transmission BMS 600 is accommodated, to wirelessly transmit the information of the battery cell 210. Thus, the low voltage (LV) connecting the battery management system BMS inside the battery pack may not be used to reduce the occurrence of the safety risk. That is, the bundle of the wires such as the LV connecting the BMS may be removed to prevent the risk of the short circuit caused by applying the current and voltage to the bundle of the wires such as the LV.

In addition, the BMS accommodation part H may be coupled at the outer side of the module housing 100 by means of coupling means to facilitate modularization, and when the wireless transmission BMS 600 accommodated in the BMS accommodation part H is broken, the accessibility and repair may be easy, and peripheral steel parts that interfere with communication of the wireless transmission BMS 600 may be minimized.

In addition, the BMS accommodation part H may be mounted on the endplate 120 of the module housing 100 and also may be mounted in the mounting groove 121 recessed from the endplate 120 toward the internal surplus space R1 of the module housing 100 to minimize a space wasted in the form of a terrace of the battery cell 210 defining the surplus space R1 inside the battery module 1000.

While the present invention has been particularly shown and described with reference to exemplary embodiments thereof, it is to be understood that the scope of the present invention is not limited thereto.

Furthermore, the scope of protection of the present invention is defined by the appended claims.

### [Description of the Symbols]

1: Battery pack
1000: Battery module
2000: Pack case
3000: Wireless receiving BMS
100: Module housing
110: Body
111: Upper plate
112: Body
113: Gas discharge hole
120,130: Endplate
121: Mounting groove
200: Cell stack
210: Battery cell
211: Pouch
212: Electrode lead
310,320: Busbar
311: Connection hole
400: Accommodation case
410: Accommodation groove
420: Coupling protrusion
430: Coupling hole
440: Coupling part
450: Fitting protrusion
500: Cover
520: Coupling hole
600: Wireless transmission BMS
610: Substrate
611: Fitting hole
620: Wireless transmission part
630: Connection part
700: Flexible circuit board
710: End
810,820: Terminal
900: Coupling means
910: Bolt
920: Nut
H: BMS accommodation part
R: Upper edge portion
R1: Surplus space

## Claims

1. A battery pack (1) comprising a battery module (1000),
wherein the battery module (1000) comprises:
a cell stack (200) in which a plurality of battery cells (210) are stacked;
a flexible circuit board (700) configured to transmit information of the plurality of the battery cells (210);
a module housing (100) configured to accommodate the cell stack (200) and the flexible circuit board (700);
a wireless transmission battery management system, BMS, (600) configured to receive the information of the battery cell (210) from the flexible circuit board (700);
**characterized in that**
a BMS accommodation part (H) is provided at an outer side of the module housing (100) to accommodate the wireless transmission BMS (600), wherein the BMS accommodation part (H) comprises an accommodation case (400) having an accommodation groove (410) that is opened to the outer side of the module housing (100) to accommodate the wireless transmission BMS (600).

2. The battery pack (1) of claim 1, wherein the accommodation case (400) is coupled at an outer side portion of the module housing (100) through a coupling means (900).

3. The battery pack (1) of claim 2, wherein the accommodation case (400) has a coupling hole (430) through which the coupling means (900) passes to be coupled.

4. The battery pack (1) of claim 1, wherein the BMS accommodation part (H) further comprises a cover (500) configured to cover an opening of the accommodation groove (410).

5. The battery pack (1) of claim 4, wherein a coupling protrusion (420) is disposed on the accommodation case (400), and
the cover (500) has a coupling hole (520) to which the coupling protrusion (420) is coupled.

6. The battery pack (1) of claim 1, wherein the module housing (100) comprises:
a tubular body (110) having a stack accommodation part (114), in which the cell stack (200) is accommodated, therein and opened to both sides; and
an endplate (120) configured to cover an opening of the body (110),
wherein the BMS accommodation part (H) is mounted on the endplate (120).

7. The battery pack (1) of claim 6, wherein a surplus space (R1) that is an empty space is defined inside the body (110) after the cell stack (200) is accommodated in the stack accommodation part (114),
the endplate has a mounting groove (121) recessed to the inside of the module housing (100) to occupy the surplus space (R1), and
the BMS accommodation part (H) is accommodated in the mounting groove (121) and mounted on the endplate (120).

8. The battery pack (1) of claim 1, wherein the wireless transmission BMS (600) comprises a connection part (630) to which an end of the flexible circuit board (700) is connected.

9. The battery pack (1) of claim 1, wherein the wireless transmission BMS (600) comprises a wireless transmission part (620) configured to transmit an information signal of the battery cell (210), which is received from the flexible circuit board (700).

10. The battery pack (1) of claim 1, wherein the battery pack (1) further comprises a wireless receiving BMS (3000) configured to wirelessly receive an information signal of the battery cell (210) from the wireless transmission BMS (600).

11. The battery pack (1) of claim 10, wherein the wireless receiving BMS (3000) is configured to determine a state of the battery cell (210) through the received information signal of the battery cell (210) and control charging/discharging of the battery cell (210) so that the battery is maintained in an appropriate state.

12. The battery pack (1) of claim 11, wherein the information signal of the battery cell (210) comprises at least one of a remaining capacity, a voltage, or a temperature signal of the battery cell (210).

13. The battery pack (1) of claim 10, wherein the battery module (1000) is provided in plurality,
the battery pack (1) further comprising a pack case (2000) configured to accommodate the plurality of battery modules (1000) therein, and
the wireless receiving BMS (3000) is installed inside the pack case (2000) to receive the information signal of the battery cell (210) disposed in each battery module (1000) from the wireless transmission BMS (600) provided in each of the plurality of battery modules (1000).

## Patentansprüche

1. Batteriepack (1), umfassend ein Batteriemodul (1000),
wobei das Batteriemodul (1000) umfasst:
einen Zellenstapel (200), in welchem eine Mehrzahl von Batteriezellen (210) gestapelt ist;
eine flexible Leiterplatte (700), welche dazu eingerichtet ist, Informationen der Mehrzahl von Batteriezellen (210) zu übertragen;
ein Modulgehäuse (100), welches dazu eingerichtet ist, den Zellenstapel (200) und die flexible Leiterplatte (700) aufzunehmen;
ein drahtloses Übertragungs-Batteriemanagementsystem, BMS, (600), welches dazu eingerichtet ist, die Informationen der Batteriezelle (210) von der flexiblen Leiterplatte (700) zu empfangen;
**dadurch gekennzeichnet, dass**
ein BMS-Aufnahmeteil (H) an einer Außenseite des Modulgehäuses (100) bereitgestellt ist, um das drahtlose Übertragungs-BMS (600) aufzunehmen, wobei der BMS-Aufnahmeteil (H) ein Aufnahmegehäuse (400) umfasst, welches eine Aufnahmenut (410) aufweist, welche zu der Außenseite des Modulgehäuses (100) hin geöffnet ist, um das drahtlose Übertragungs-BMS (600) aufzunehmen.

2. Batteriepack (1) nach Anspruch 1, wobei das Aufnahmegehäuse (400) an einem Außenseitenabschnitt des Modulgehäuses (100) durch ein Kopplungsmittel (900) gekoppelt ist.

3. Batteriepack (1) nach Anspruch 2, wobei das Aufnahmegehäuse (400) ein Kopplungsloch (430) aufweist, durch welches das Kopplungsmittel (900) hindurchgeführt ist, um gekoppelt zu sein.

4. Batteriepack (1) nach Anspruch 1, wobei der BMS-Aufnahmeteil (H) ferner eine Abdeckung (500) umfasst, welche dazu eingerichtet ist, eine Öffnung der Aufnahmenut (410) abzudecken.

5. Batteriepack (1) nach Anspruch 4, wobei ein Kopplungsvorsprung (420) an dem Aufnahmegehäuse (400) angeordnet ist und
die Abdeckung (500) ein Kopplungsloch (520) aufweist, mit welchem der Kopplungsvorsprung (420) gekoppelt ist.

6. Batteriepack (1) nach Anspruch 1, wobei das Modulgehäuse (100) umfasst: einen rohrförmigen Körper (110), welcher darin einen Stapelaufnahmeteil (114) aufweist, in welchem der Zellenstapel (200) aufgenommen ist, und welcher zu beiden Seiten hin geöffnet ist; und
eine Endplatte (120), welche dazu eingerichtet ist, eine Öffnung des Körpers (110) abzudecken,
wobei der BMS-Aufnahmeteil (H) an der Endplatte (120) montiert ist.

7. Batteriepack (1) nach Anspruch 6, wobei ein Überschussraum (R1), welcher ein leerer Raum ist, innerhalb des Körpers (110) definiert ist, nachdem der Zellenstapel (200) in dem Stapelaufnahmeteil (114) aufgenommen worden ist;
die Endplatte eine Montagenut (121) aufweist, welche zu dem Inneren des Modulgehäuses (100) hin vertieft ist, um den Überschussraum (R1) einzunehmen; und
der BMS-Aufnahmeteil (H) in der Montagenut (121) aufgenommen ist und an der Endplatte (120) montiert ist.

8. Batteriepack (1) nach Anspruch 1, wobei das drahtlose Übertragungs-BMS (600) einen Verbindungsteil (630) umfasst, mit welchem ein Ende der flexiblen Leiterplatte (700) verbunden ist.

9. Batteriepack (1) nach Anspruch 1, wobei das drahtlose Übertragungs-BMS (600) einen drahtlosen Übertragungsteil (620) umfasst, welcher dazu eingerichtet ist, ein Informationssignal der Batteriezelle (210) zu übertragen, welches von der flexiblen Leiterplatte (700) empfangen wird.

10. Batteriepack (1) nach Anspruch 1, wobei der Batteriepack (1) ferner ein drahtloses Empfangs-BMS (3000) umfasst, welches dazu eingerichtet ist, ein Informationssignal der Batteriezelle (210) drahtlos von dem drahtlosen Übertragungs-BMS (600) zu empfangen.

11. Batteriepack (1) nach Anspruch 10, wobei das drahtlose Empfangs-BMS (3000) dazu eingerichtet ist, durch das empfangene Informationssignal der Batteriezelle (210) einen Zustand der Batteriezelle (210) zu bestimmen und ein Laden/Entladen der Batteriezelle (210) derart zu steuern, dass die Batterie in einem geeigneten Zustand gehalten wird.

12. Batteriepack (1) nach Anspruch 11, wobei das Informationssignal der Batteriezelle (210) wenigstens eines aus einer Restkapazität, einer Spannung oder einem Temperatursignal der Batteriezelle (210) umfasst.

13. Batteriepack (1) nach Anspruch 10, wobei das Batteriemodul (1000) in einer Mehrzahl bereitgestellt ist,
wobei der Batteriepack (1) ferner ein Packgehäuse (2000) umfasst, welches dazu eingerichtet ist, die Mehrzahl von Batteriemodulen (1000) darin aufzunehmen, und
wobei das drahtlose Empfangs-BMS (3000) innerhalb des Packgehäuses (2000) installiert ist, um das Informationssignal der Batteriezelle (210), welche in jedem Batteriemodul (1000) angeordnet ist, von dem drahtlosen Übertragungs-BMS (600) zu empfangen, welches in jedem der Mehrzahl von Batteriemodulen (1000) bereitgestellt ist.

## Revendications

1. Bloc-batterie (1) comprenant un module de batterie (1000),
dans lequel le module de batterie (1000) comprend :
une pile de cellules (200) dans laquelle une pluralité de cellules de batterie (210) sont empilées ;
une carte de circuit imprimé flexible (700) configurée pour transmettre des informations de la pluralité de cellules de batterie (210) ;
un boîtier de module (100) configuré pour accueillir la pile de cellules (200) et la carte de circuit imprimé flexible (700) ;
un système de gestion de batterie, BMS, de transmission sans fil (600) configuré pour recevoir les informations de la cellule de batterie (210) en provenance de la carte de circuit imprimé flexible (700) ;
**caractérisé en ce que**
une partie de réception de BMS (H) est prévue sur un côté extérieur du boîtier de module (100) pour accueillir le BMS de transmission sans fil (600), dans lequel la partie de réception de BMS (H) comprend un boîtier de réception (400) ayant une rainure de réception (410) qui est ouverte vers le côté extérieur du boîtier de module (100) pour accueillir le BMS de transmission sans fil (600).

2. Bloc-batterie (1) selon la revendication 1, dans lequel le boîtier de réception (400) est couplé à une partie latérale extérieure du boîtier de module (100) par l'intermédiaire d'un moyen de couplage (900).

3. Bloc-batterie (1) selon la revendication 2, dans lequel le boîtier de réception (400) présente un orifice de couplage (430) à travers lequel le moyen de couplage (900) passe pour être couplé.

4. Bloc-batterie (1) selon la revendication 1, dans lequel la partie de réception de BMS (H) comprend en outre un couvercle (500) conçu pour recouvrir une ouverture de la rainure de réception (410).

5. Bloc-batterie (1) selon la revendication 4, dans lequel une saillie de couplage (420) est disposée sur le boîtier de réception (400), et
le couvercle (500) présente un orifice de couplage (520) auquel la saillie de couplage (420) est couplée.

6. Bloc-batterie (1) selon la revendication 1, dans lequel le boîtier de module (100) comprend :
un corps tubulaire (110) ayant une partie de réception de pile (114), dans laquelle la pile de cellules (200) est reçue en son sein, et ouverte des deux côtés ; et
une plaque d'extrémité (120) conçue pour recouvrir une ouverture du corps (110),
dans lequel la partie de réception de BMS (H) est montée sur la plaque d'extrémité (120).

7. Bloc-batterie (1) selon la revendication 6, dans lequel un espace excédentaire (R1) qui est un espace vide est défini à l'intérieur du corps (110) après que la pile de cellules (200) est logée dans la partie de réception de pile (114),
la plaque d'extrémité présente une rainure de montage (121) en retrait à l'intérieur du boîtier de module (100) pour occuper l'espace excédentaire (R1), et
la partie de réception de BMS (H) est logée dans la rainure de montage (121) et montée sur la plaque d'extrémité (120).

8. Bloc-batterie (1) selon la revendication 1, dans lequel le BMS de transmission sans fil (600) comprend une pièce de connexion (630) à laquelle une extrémité de la carte de circuit imprimé flexible (700) est connectée.

9. Bloc-batterie (1) selon la revendication 1, dans lequel le BMS de transmission sans fil (600) comprend une partie de transmission sans fil (620) configurée pour émettre un signal d'information de la cellule de batterie (210), qui est reçu en provenance de la carte de circuit imprimé flexible (700).

10. Bloc-batterie (1) selon la revendication 1, dans lequel le bloc-batterie (1) comprend en outre un BMS de réception sans fil (3000) configuré pour recevoir sans fil un signal d'information de la cellule de batterie (210) en provenance du BMS de transmission sans fil (600).

11. Bloc-batterie (1) selon la revendication 10, dans lequel le BMS de réception sans fil (3000) est configuré pour déterminer un état de la cellule de batterie (210) par l'intermédiaire du signal d'information reçu de la cellule de batterie (210) et contrôler la charge/décharge de la cellule de batterie (210) de sorte que la batterie soit maintenue dans un état approprié.

12. Bloc-batterie (1) selon la revendication 11, dans lequel le signal d'information de la cellule de batterie (210) comprend au moins un parmi une capacité restante, une tension ou un signal de température de la cellule de batterie (210).

13. Bloc-batterie (1) selon la revendication 10, dans lequel le module de batterie (1000) est prévu en une pluralité,
le bloc-batterie (1) comprenant en outre un boîtier de bloc-batterie (2000) configuré pour recevoir en son sein la pluralité de modules de batterie (1000), et
le BMS de réception sans fil (3000) est installé à l'intérieur du boîtier de bloc-batterie (2000) pour recevoir le signal d'information de la cellule de batterie (210) disposée dans chaque module de batterie (1000) à partir du BMS de transmission sans fil (600) prévu dans chacun de la pluralité de modules de batterie (1000).
